# EUROPÄISCHE PATENTSCHRIFT

(11) **EP 3 081 418 B1**
(45) Veröffentlichungstag und Bekanntmachung des Hinweises auf die Patenterteilung: **09.01.2019**
(21) Anmeldenummer: 16163871.3
(22) Anmeldetag: 05.04.2016
(51) Int. Cl.: B60J 7/22

(54) **WINDSTOPEINRICHTUNG**
WIND STOP DEVICE
DISPOSITIF PARE-VENT

(30) Priorität: 13.04.2015 DE 102015105607
(43) Veröffentlichungstag der Anmeldung: 19.10.2016
(73) Patentinhaber: Bosal ACPS Holding 2 B.V., 4131 PK Vianen (NL)
(72) Erfinder: Neumann, Peter, 71720 Oberstenfeld (DE)
(74) Vertreter: Hoeger, Stellrecht & Partner Patentanwälte mbB

(56) Entgegenhaltungen:
- EP-A1- 2 899 045
- DE-A1-102006 030 076
- DE-A1-102010 062 840
- DE-A1-102011 052 140
- DE-A1-102012 100 585

## Beschreibung

Die Erfindung betrifft eine Windstopeinrichtung für Kraftfahrzeuge, insbesondere für Cabriofahrzeuge, umfassend ein Windschott mit einem sich in einer Fahrzeugquerrichtung erstreckenden Windschottrahmen und mit einem, eine Rahmenöffnung des Windschottrahmens verschließenden strömungshindernden Element, wobei das Windschott durch mindestens ein Gelenk um eine Windschottfaltachse zwischen einer entfalteten Stellung und einer zusammengefalteten Stellung faltbar ist, eine mit dem Windschott um eine sich in Fahrzeugquerrichtung erstreckende Schwenkachse schwenkbar verbundene Abdeckung mit einem sich von der Schwenkachse weg erstreckenden Abdeckungsrahmen nun mit einem eine Rahmenöffnung des Abdeckungsrahmens verschließenden strömungshindernden Element, wobei der Abdeckungsrahmen durch mindestens ein Gelenk um eine Abdeckungsfaltachse zwischen einer entfalteten Stellung und einer Zusammengefalteten Stellung faltbar ist.

Derartige Windstopeinrichtungen sind aus dem Stand der Technik, beispielsweise der DE 10 2007 042 952 A oder der DE 102011 052 140 A1, bekannt.

Ferner ist aus der nicht vorveröffentlichten EP 2 899 045 A1 eine Windstopeinrichtung für Kraftfahrzeuge, insbesondere für Cabriofahrzeuge bekannt, umfassend ein Windschott mit einem sich in einer Fahrzeugquerrichtung erstreckenden Windschottrahmen und mit einem eine Rahmenöffnung des Windschottrahmens verschließenden strömungshindernden Element, wobei das Windschott durch mindestens ein Gelenk um eine Windschottfaltachse zwischen einer entfalteten Stellung und einer zusammengefalteten Stellung faltbar ist, eine mit dem Windschott um eine sich in Fahrzeugquerrichtung erstreckende Schwenkachse schwenkbar verbundene Abdeckung mit einem sich von der Schwenkachse weg erstreckenden Abdeckungsrahmen und mit einem eine Rahmenöffnung des Abdeckungsrahmens verschließenden strömungshindernden Element, wobei der Abdeckungsrahmen durch mindestens ein Gelenk um eine Abdeckungsfaltachse zwischen einer entfalteten Stellung und einer zusammengefalteten Stellung faltbar ist, dadurch gekennzeichnet, dass zur Verhinderung einer Faltbewegung des Windschotts um die Windschottfaltachse der Windschottrahmen mindestens auf einer der Schwenkachse abgewandten Seite mit einer Blockiereinrichtung versehen ist, welche in einer Blockierstellung eine Faltbewegung des Windschottrahmens um die Windschottfaltachse blockiert und welche in einer Freigabestellung das Falten des Windschottrahmens um die Windschottfaltachse von der entfalteten Stellung in die gefaltete Stellung und umgekehrt zulässt.

Bei diesen Windstopeinrichtungen besteht das Problem, dass in der aktiven Stellung des Windschotts der Windschottrahmen aufgrund der auf diesen einwirkenden Windkräfte die Tendenz hat, um die Windschottfaltachse zu verschwenken und somit eine unerwünschte Faltbewegung auszuführen.

Diese Tendenz wird umso größer, je höher die Geschwindigkeit des Fahrzeugs ist, da der Luftwirbel, der von dem Windschott von den Fahrzeuginsassen abgehalten werden soll, mit zunehmender Geschwindigkeit des Fahrzeugs eine größere Kraft auf das Windschott ausübt.

Der Erfindung liegt daher die Aufgabe zugrunde, eine derartige unerwünschte Faltbewegung des Windschottfaltrahmens um die Windschottfaltachse in der aktiven Stellung des Windschotts zu verhindern.

Diese Aufgabe wird bei einer Windstopeinrichtung der eingangs beschriebenen Art erfindungsgemäß durch die Merkmale des Anspruchs 1 gelöst.

Der Vorteil der erfindungsgemäßen Lösung ist somit darin zu sehen, dass damit die unerwünschte Faltbewegung des Windschotts in der aktiven Stellung verhindert werden kann.

Besonders günstig ist es, wenn die Blockiereinrichtung in der Blockierstellung zwischen der Schwenkachse abgewandt angeordneten Querstreben des Windschottrahmens wirksam ist, um die Faltbewegung um die Windschottfaltachse zu blockieren.

Die Blockiereinrichtung kann dabei in unterschiedlichster Art und Weise ausgebildet sein.

Insbesondere ist die Blockiereinrichtung so ausgebildet, dass sie ein zwischen einer Blockierstellung und einer Freigabestellung bewegbares erstes Blockierelement aufweist, welches in der Blockierstellung mit einem zweiten Blockierelement zusammen wirkt.

Das Zusammenwirken kann dabei in unterschiedlichster Art und Weise erfolgen.

Beispielsweise können die Blockierelemente so ausgebildet sein, dass sie eine kraftschlüssige Blockierung bewirken.

Besonders vorteilhaft ist es jedoch, wenn das erste Blockierelement und das zweite Blockierelement in der Blockierstellung formschlüssig zusammenwirken.

Prinzipiell könnten die Blockierelemente auf dem Windschottrahmen, insbesondere auf Querstreben des Windschottrahmens, angeordnet sein.

Eine besonders günstige Lösung sieht jedoch vor, dass die Blockierelemente an den der Windschottfaltachse zugewandten freien Enden von Querstreben des Windschottrahmens angeordnet sind, so dass insbesondere die Blockierelemente in einfacher Weise in die Querstreben des Windschottrahmens, insbesondere in einen Innenraum derselben, integriert werden können.

Vorzugsweise ist dabei eines der Blockierelemente in einem freien Ende und das andere der Blockierelemente in dem anderen freien Ende des Windschottrahmens angeordnet.

Ferner ist vorzugsweise vorgesehen, dass das erste Blockierelement in Richtung des zweiten Blockierelements und entgegengesetzt dazu bewegbar in einer Blockierelementaufnahme geführt ist, wobei die Blockierelementaufnahme vorzugsweise in einem freien Ende einer der Querstreben vorgesehen ist.

Insbesondere ist das erste Blockierelement in Richtung der Windschottfaltachse und entgegengesetzt zur Windschottfaltachse bewegbar, um dieses von der Blockierstellung in die Freigabestellung und umgekehrt bewegen zu können.

Die Blockierelemente sind vorzugsweise so ausgebildet, dass jedes der Blockierelemente ein Formschlusselement aufweist, das komplementär zum anderen Formschlusselement ausgebildet ist und dass in der Blockierstellung der Blockierelemente die Formschlusselemente ineinander greifen und in der Freigabestellung die Formschlusselemente außer Eingriff stehen.

Dabei können die Formschlusselemente in unterschiedlichster Art und Weise ausgebildet sein.

Vorzugsweise ist vorgesehen, dass mindestens eines der Formschlusselemente als Vorsprung ausgebildet ist, der in der Blockierstellung beider Formschlusselemente in das als Vorsprungaufnahmeelement ausgebildete andere Formschlusselement eingreift, während in der Freigabestellung die Formschlusselemente außer Eingriff sind.

Ferner ist vorzugsweise vorgesehen, dass das die Vorsprungaufnahme aufweisende Blockierelement in der Lage ist, den Vorsprung in einer senkrecht zur Windschottfaltachse liegenden Bewegungsebene auf der Seite zu hintergreifen, welche die Blockierung eines Faltens von der entfalteten Stellung in die zusammengefaltete Stellung ermöglicht.

Ferner ist vorzugsweise vorgesehen, dass das erste Blockierelement durch einen Federkraftspeicher in Richtung seiner Blockierstellung beaufschlagt ist.

Insbesondere ist bei der erfindungsgemäßen Lösung vorgesehen, dass die Blockiereinrichtung einem auf einer der Schwenkachse abgewandten Seite des Windschottrahmens angeordneten Gelenk zugeordnet ist.

Insbesondere ist dabei das Gelenk zwischen den der Windschottfaltachse zugewandten freien Enden der Querstreben des Windschottrahmens wirksam, so dass mit der Blockiereinrichtung das zwischen diesen Enden angeordnete Gelenk blockierbar ist.

Hinsichtlich der Betätigung der Blockiereinrichtung wurden im Zusammenhang mit der bisherigen Erläuterung der erfindungsgemäßen Lösung keine weiteren Angaben gemacht.

Es kann beispielsweise eine einfache manuelle Betätigung vorgesehen sein.

Die erfindungsgemäße Lösung sieht vor, dass der Blockiereinrichtung eine Betätigungseinrichtung zugeordnet ist, welche bei einem Schwenken des Windschotts von der aktiven Stellung in die inaktive Stellung die Blockiereinrichtung in die Freigabestellung überführt, dabei ist vorgesehen, dass die Betätigungseinrichtung die Stellung des Windschotts relativ zur Abdeckung erfasst und beim Übergang von der aktiven Stellung in die inaktive Stellung des Windschotts die Blockiereinrichtung in die Freigabestellung überführt.

Insbesondere ist hierzu vorgesehen, dass die Betätigungseinrichtung ein am Windschottrahmen angeordnetes Betätigungselement umfasst, welches zumindest in der inaktiven Stellung des Windschotts mit der Abdeckung derart zusammenwirkt, dass die Blockiereinrichtung in der inaktiven Stellung des Windschotts in der Freigabestellung steht.

Dabei könnte beispielsweise das Betätigungselement als Tastfinger ausgebildet sein, welches die durch Abtasten der Abdeckung die inaktive Stellung des Windschotts erfasst und bei Erreichen der inaktiven Stellung des Windschotts die Blockiereinrichtung in die Freigabestellung überführt.

Eine besonders günstige Lösung sieht jedoch vor, dass das Betätigungselement als Zugelement ausgebildet ist, welches insbesondere einem auf das erste Blockierelement wirkenden Federkraftspeicher entgegenwirkt.

Vorzugsweise ist dabei das Betätigungselement an einem Ende mit der Abdeckung gekoppelt und am anderen Ende mit dem ersten Blockierelement, um auf dieses einzuwirken.

Eine Einwirkung auf das Betätigungselement erfolgt in diesem Fall vorzugsweise dadurch, dass das Betätigungselement über einen im Bereich der Schwenkachse angeordneten Umlenkungskörper verläuft und dass der Umlenkungskörper so angeordnet ist, dass ein auf dem Umlenkungskörper aufliegender Umlenkungsbereich des Betätigungselements zwischen der aktiven Stellung des Windschotts und der inaktiven Stellung des Windschotts variiert.

Insbesondere ist dabei der Umlenkungskörper so ausgebildet und angeordnet, dass die Länge des Umlenkungsabschnitts in der inaktiven Stellung anders ist als in der aktiven Stellung.

Eine besonders günstige Lösung sieht vor, dass der Umlenkungskörper so angeordnet ist, dass ein Umschlingungsweg des Umlenkungsabschnitts des Betätigungselements in der aktiven Stellung des Windschotts kürzer ist als in der inaktiven Stellung des Windschotts.

Besonders vorteilhaft ist eine Lösung, bei welcher der Windschottrahmen in der aktiven Stellung um die Windschottfaltachse so schwenkbar ist, dass die Faltbewegung in Vorwärtsfahrtrichtung des Kraftfahrzeugs erfolgt.

Eine Faltbewegung in Vorwärtsfahrtrichtung bedeutet dabei, dass sich die Windschottfaltachse bei der Faltbewegung in der Vorwärtsfahrtrichtung bewegt.

Dabei kann der Windschottrahmen vorzugsweise auch so ausgebildet sein, dass er in der aktiven Stellung entgegengesetzt zur Vorwärtsfahrtrichtung keine Faltbewegung durchführen kann, das heißt gegen eine derartige Faltrichtung blockiert ist.

Insbesondere liegt in diesem Fall die Windschottfaltachse in der aktiven Stellung des Windschottrahmens auf einer, einer bezogen auf Vorwärtsfahrtrichtung hinteren Seite des Windschottrahmens.

Eine vorteilhafte Ausführungsform der Windstopeinrichtung sieht vor, dass der Windschottrahmen und der Abdeckungsrahmen um die Schwenkachse derart gegeneinander verschwenkbar sind, dass in einer abgeklappten Stellung des Windschottrahmens der eine der Rahmen in der Rahmenöffnung des anderen der Rahmen liegt.

Der Vorteil dieser Lösung ist darin zu sehen, dass damit bereits bei abgeklappter Stellung des Windschottrahmens eine raumsparende Anordnung des Windschottrahmens relativ zum Abdeckungsrahmen besteht, so dass bei nachfolgender Faltung des Windschottrahmens und des Abdeckungsrahmens ebenfalls der Raumbedarf für die zusammengefaltete Windstopeinrichtung gering ist.

Besonders günstig ist es, wenn in der abgeklappten Stellung des Windschottrahmens eine Bauhöhe der Windstopeinrichtung der Rahmenbreite des Rahmens mit der größten Rahmenbreite entspricht.

Besonders günstig ist es hierbei, wenn die Rahmenbreite des Windschottrahmens und des Abdeckungsrahmens ungefähr gleich groß ist.

Im Zusammenhang mit den bislang beschriebenen Lösungen wurde davon ausgegangen, dass der Windschottrahmen um die Windschottfaltachse und der Abdeckungsrahmen um die Abdeckungsfaltachse faltbar sind, wobei die Faltungsrichtung offen gelassen wurde.

Prinzipiell ist es denkbar, den Windschottrahmen und die Abdeckungsrahmen in unterschiedlichen Faltrichtungen zu falten.

Besonders wenig Bauraum ist bei einer erfindungsgemäßen Windstopeinrichtung vonnöten, wenn ausgehend von der abgeklappten Stellung des Windschottrahmens der Windschottrahmen und der Abdeckungsrahmen in derselben Faltrichtung faltbar sind, so dass die zusammengefaltete Windstopeinrichtung dann eine Bauhöhe aufweist, die beispielsweise der doppelten Bauhöhe in der abgeklappten Stellung des Windschottrahmens entsprechen kann.

Die Faltung des Windschottrahmens und des Abdeckungsrahmens lässt sich insbesondere dann optimal durchführen, wenn die Windschottfaltachse und die Abdeckungsfaltachse in der abgeklappten Stellung des Windschottrahmens im Wesentlichen miteinander zusammenfallend angeordnet sind, so dass nämlich sowohl der Windschottrahmen als auch der Abdeckungsrahmen im Wesentlichen um dieselbe Faltachse gefaltet werden können.

Hinsichtlich der relativen Lage des Windschottrahmens und des Abdeckungsrahmens in der abgeklappten Stellung des Windschottrahmens wurden bislang keine näheren Angaben gemacht.

So ist es für das Falten der Windstopeinrichtung besonders günstig, wenn in der abgeklappten Stellung des Windschottrahmens eine Mittelebene des einen der Rahmen ungefähr parallel zur Mittelebene des anderen der Rahmen liegt.

Besonders günstig ist es dabei, wenn in der abgeklappten Stellung des Windschottrahmens die Mittelebenen des Windschottrahmens und des Abdeckungsrahmens näherungsweise zusammenfallend angeordnet sind.

Besonders günstig für das Falten des Windschotts ist es, wenn die Windschottfaltachse in einer Ebene liegt, die an die Windschottfaltachse angrenzende Enden der Querstreben des Windschottrahmens nicht schneidet.

Ferner ist es für das Falten des Abdeckungsrahmens günstig, wenn die Abdeckungsfaltachse in einer Ebene liegt, die an die Abdeckungsfaltachse angrenzende Enden der Querstreben des Abdeckungsrahmens nicht schneidet.

In beiden Fällen besteht dadurch die Möglichkeit, dass die jeweils an die Windschottfaltachse bzw. Abdeckungsfaltachse angrenzenden Enden der Streben in der gefalteten Stellung aufeinander liegend oder in geringem Abstand voneinander angeordnet werden können, so dass dadurch eine Faltung um im Wesentlichen 180° sowohl des Windschottrahmens bzw. des Abdeckungsrahmens möglich ist.

Hinsichtlich des Verlaufs des strömungshindernden Elements relativ zum Windschottrahmen wurden bislang keine näheren Angaben gemacht. So sieht eine vorteilhafte Lösung vor, dass in der abgeklappten Stellung des Windschottrahmens sich das strömungshindernde Element des Windschotts in einer den Windschottrahmen auf einer Seite tangierenden Fläche erstreckt.

Ferner ist bezüglich der relativen Anordnung des strömungshindernden Elements und der Windschottfaltachse vorgesehen, dass bei einer zweckmäßigen Ausführungsform in der abgeklappten Stellung des Windschottrahmens die Windschottfaltachse im Wesentlichen in der Fläche verläuft, in welcher sich das strömungshindernde Element des Windschotts erstreckt. Ferner wurden auch keine näheren Angaben zur relativen Anordnung des strömungshindernden Elements der Abdeckung relativ zum Abdeckungsrahmen gemacht. Eine zweckmäßige Lösung sieht dabei vor, dass in der abgeklappten Stellung des Windschottrahmens sich das strömungshindernde Element der Abdeckung in einer den Abdeckungsrahmen auf einer Seite tangierenden Fläche erstreckt.

Ferner sieht eine zweckmäßige relative Anordnung der Abdeckungsfaltachse und des strömungshindernden Elements vor, dass in der abgeklappten Stellung des Windschottrahmens die Abdeckungsfaltachse im Wesentlichen in einer Fläche verläuft, in welcher sich das strömungshindernde Element der Abdeckung erstreckt.

Besonders günstig lässt sich bei der erfindungsgemäßen Windschotteinrichtung ein Falten um die Windschottfaltachse und die Abdeckungsfaltachse durchführen, wenn in der abgeklappten Stellung des Windschottrahmens das strömungshindernde Element des Windschotts und das strömungshindernde Element der Abdeckung im Wesentlichen aneinander anliegen.

Hinsichtlich der Ausbildung des Windschottrahmens wurden im Zusammenhang mit der bisherigen Erläuterung der einzelnen Ausführungsbeispiele keine näheren Angaben gemacht.

So sieht eine vorteilhafte Lösung vor, dass der Windschottrahmen als eine Rahmenöffnung ungefähr U-förmig umschließend ausgebildet ist.

Eine alternative Lösung sieht vor, dass der Windschottrahmen als um eine Rahmenöffnung herum geschlossen verlaufend ausgebildet ist.

Hinsichtlich der Ausbildung des Abdeckungsrahmens ist vorzugsweise vorgesehen, dass der Abdeckungsrahmen als eine Rahmenöffnung ungefähr U-förmig umschließend ausgebildet ist.

Die relative Anordnung der strömungshindernden Elemente des Windschotts und der Abdeckung können in unterschiedlichster Art und Weise erfolgen.

Eine einfache Ausführungsform sieht vor, dass das strömungshindernde Element der Abdeckung separat vom strömungshindernden Element des Windschotts ausgebildet und angeordnet ist.

Eine zweckmäßige Lösung sieht jedoch vor, dass das strömungshindernde Element des Windschotts in das strömungshindernde Element der Abdeckung übergeht.

Im Fall eines Windschottrahmens der geschlossen um die Rahmenöffnung herum verläuft, ist dabei das strömungshindernde Element an den unteren Streben fixiert.

Eine weitere vorteilhafte Ausführungsform sieht vor, dass das strömungshindernde Element des Windschotts und das strömungshindernde Element der Abdeckung in einem zwischen oberen Querstreben des Windschottrahmens und hinteren Querstreben des Abdeckungsrahmens liegenden Übergangsbereich unmittelbar ineinander übergehen.

Besonders günstig ist es bei der erfindungsgemäßen Lösung, wenn das jeweilige strömungshindernde Element aus einem elastischen Material ausgebildet ist.

Im Zusammenhang mit der erfindungsgemäßen Windstopeinrichtung wurden noch keine Ausführungen zur Positionierung des Windschotts relativ zur Abdeckung gemacht.

Eine vorteilhafte Lösung der Windstopeinrichtung sieht dabei vor, dass das Windschott durch eine Positioniereinrichtung in einer hochgeklappten aktiven Stellung und einer abgeklappten inaktiven Stellung stabil positionierbar ist. Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine perspektivische Ansicht eines ersten Ausführungsbeispiel einer erfindungsgemäßen Windstopeinrichtung, montiert an einer bereichsweise dargestellten Fahrzeugkarosserie;
- Fig. 2: eine perspektivische und vergrößerte Darstellung des ersten Ausführungsbeispiels der erfindungsgemäßen Windstopeinrichtung bei hochgeklapptem, in aktiver Stellung stehendem Windschott;
- Fig. 3: eine Darstellung ähnlich Fig. 2 bei abgeklapptem, in inaktiver Stellung stehendem Windschott;
- Fig. 4: eine perspektivische Darstellung des ersten Ausführungsbeispiels der erfindungsgemäßen Windstopeinrichtung in gefalteter Stellung von Windschott und Abdeckung;
- Fig. 5: einen Schnitt längs Linie 5-5 in Fig. 2 durch das der Schwenkachse abgewandt angeordnete Gelenk eines Windschottrahmens mit in seiner Blockierstellungen stehendem Blockierelement;
- Fig. 6: einen Schnitt längs Linie 6-6 in Fig. 5 durch das Gelenk mit der Blockiereinrichtung mit in seiner Blockierstellung stehendem Blockierelement;
- Fig. 7: einen Schnitt entsprechend Fig. 6 mit in Freigabestellung stehendem Blockierelement;
- Fig. 8: eine Teilansicht der Windstopeinrichtung mit einem Schnitt durch den dargestellten Teil des Windschottrahmens längs Linie 8-8 in Fig. 9;
- Fig. 9: einen Schnitt längs Linie 9-9 in Fig. 8 in der aktiven Stellung des Windschotts und
- Fig. 10: einen teilweisen Schnitt entsprechend dem Schnitt in Fig. 9 in der inaktiven Stellung des Windschotts.

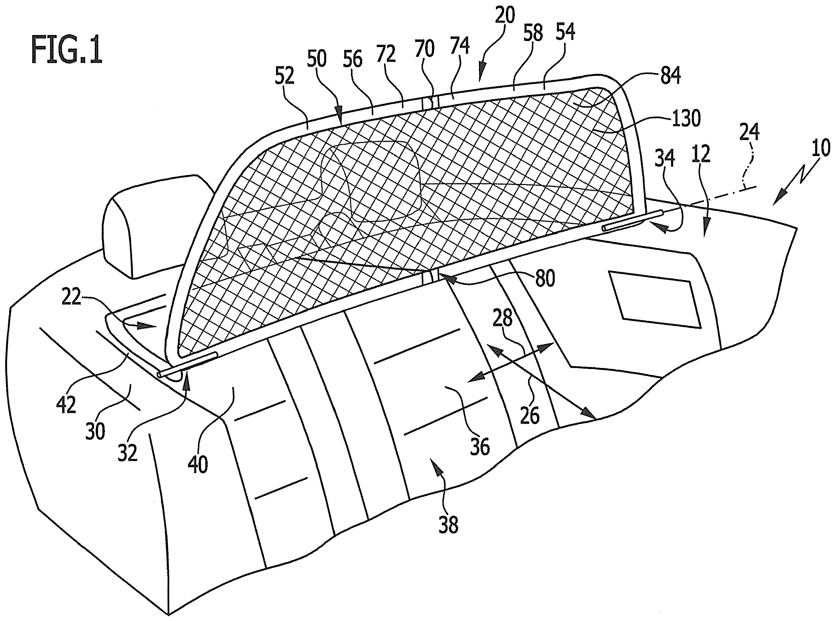

Ein erstes Ausführungsbeispiel einer erfindungsgemäßen Windstopeinrichtung 10 für ein Cabrio-Fahrzeug, dargestellt in Fig. 1 in einem an einer Fahrzeugkarosserie 12 montierten Zustand, umfasst ein Windschott 20 und eine Abdeckung 22, die schwenkbar um eine Schwenkachse 24 miteinander verbunden sind, wobei der Schwenkachse 24 parallel zu einer quer zur Fahrzeuglängsachse 26 verlaufende Fahrzeugquerachse 28 ausgerichtet ist.

Im an der Fahrzeugkarosserie 12 montierten Zustand liegt die Abdeckung 22 in Höhe einer Gürtellinie 30 der Fahrzeugkarosserie 12 an dieser an und ist dabei mit der Fahrzeugkarosserie 12 über Fixiereinrichtungen 32 und 34 verbunden, wobei die Abdeckung 22 einen hinteren Bereich 36 eines Fahrgastraums überdeckt, der beispielsweise durch eine hintere Sitzanlage 38 der Fahrzeugkarosserie 12 begrenzt ist und vor dieser liegt.

Vorzugsweise grenzt die Abdeckung 22 an Rücksitzlehnen 40 der hinteren Sitzanlage 38 an oder überdeckt diese noch, so dass die Abdeckung 22 im Wesentlichen einen in Höhe der Gürtellinie 30 liegenden hinteren Bereich 42 einer Karosserieöffnung des Cabrio-Fahrzeugs im Wesentlichen verschließt.

Die Schwenkachse 24 ist dabei auf einer, einer zeichnerisch nicht dargestellten vorderen Sitzreihe zugewandten Seite der Abdeckung 22 angeordnet, so dass das Windschott 20 in seiner hochgeklappten aktiven Stellung im Wesentlichen hinter Rücksitzlehnen und Kopfstützen einer vorderen Sitzreihe steht.

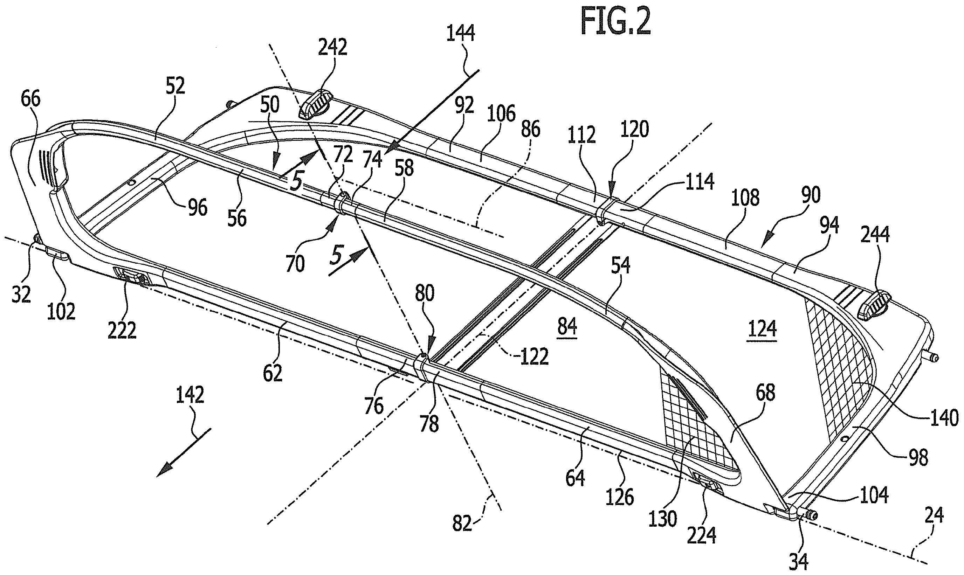

Wie in Fig. 1 und noch vergrößert dargestellt in Fig. 2, umfasst das Windschott 20 einen Windschottrahmen 50, welcher aus zwei Rahmenhälften 52 und 54 gebildet ist, die jeweils ungefähr C-förmig ausgeführt sind und jeweils der Schwenkachse 24 abgewandt angeordnete Querstreben 56 und 58 sowie der Schwenkachse 24 zugewandt angeordnete Querstreben 62 und 64 aufweisen, die durch seitliche Streben 66 und 68 miteinander verbunden sind. Die oberen Querstreben 56 und 58 sind im Bereich ihrer den seitlichen Querstreben 66 abgewandten freien Enden 72 und 74 mittels eines oberen der Schwenkachse 24 abgewandt angeordneten Gelenks 70 verbunden und die unteren Querstreben 62 und 64 sind im Bereich ihrer freien, den seitlichen Streben 66 und 68 abgewandten Enden 76 und 78 mittels eines der Schwenkachse 24 zugewandt angeordneten Gelenks 80 verbunden, wobei die beiden Gelenke 70 und 80 koaxial zueinander angeordnet sind und somit eine Windschottfaltachse 82 festlegen, längs welcher die Rahmenhälften 52 und 54 von einer in Fig. 1 bis 3 dargestellten ausgebreiteten Stellung in eine gefaltete Stellung zusammenfaltbar sind, wie nachstehend noch im Einzelnen beschrieben.

In der ausgebreiteten Stellung des Windschottrahmens 50 umschließt dieser eine Rahmenöffnung 84.

Außerdem umfasst die Abdeckung 22 einen im Wesentlichen C-förmigen Abdeckungsrahmen 90, der aus zwei Rahmenbügeln 92 und 94 gebildet ist, welche jeweils Seitenstreben 96 und 98 aufweisen, die jeweils von Lagerkörpern 102 und 104 für die schwenkbare Lagerung des Windschotts 20 um die Achse 24 ausgehend sich zu hinteren Querstreben 106 und 108 erstrecken, welche mit einander zugewandten Enden 112 und 114 durch ein der Schwenkachse 24 abgewandt angeordnetes Gelenk 120 verbunden sind, das eine Abdeckungsfaltachse 122 definiert, um welche die Rahmenbügel 92 und 94 des Abdeckungsrahmens 90 wie nachfolgend noch im Einzelnen beschrieben, von der in Fig. 1 bis 3 dargestellten ausgebreiteten Stellung in eine gefaltete Stellung bringbar sind.

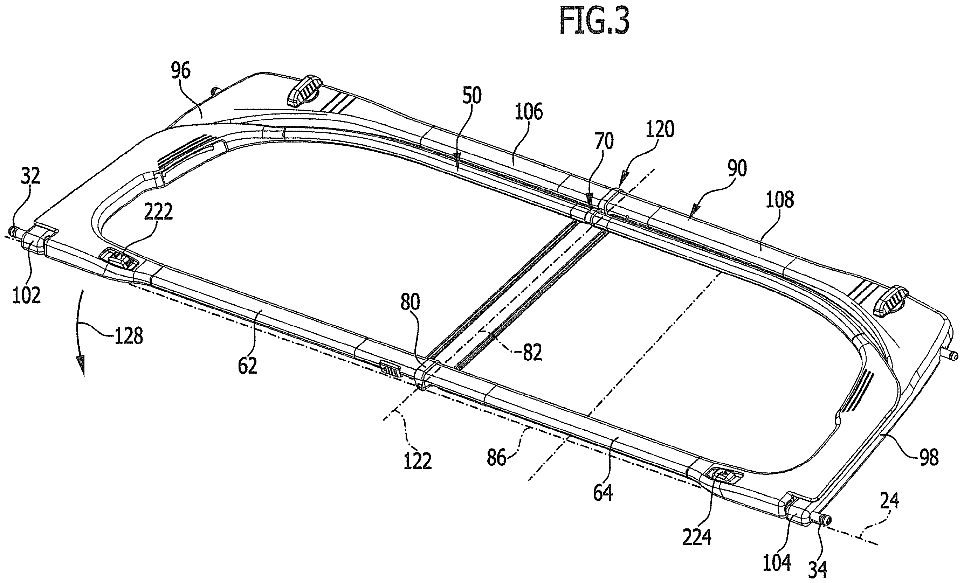

Bei der erfindungsgemäßen Windstopeinrichtung 10 ist das Windschott 20 von einer in Fig. 1 und 2 dargestellten hochgeklappten aktiven Stellung um die Schwenkachse 24 in eine in Fig. 3 dargestellte inaktive oder abgeklappte Stellung verschwenkbar, wobei, wie in Fig. 3 dargestellt, der Windschottrahmen 50 so ausgebildet ist, dass dieser mit seinem die der Schwenkachse 24 zugewandt angeordneten Querstreben 62, 64 umfassenden Bereich zwischen den Lagerkörpern 102 und 104 angeordnet ist und somit liegt der gesamte Windschottrahmen 50 in der in Fig. 3 dargestellten abgeklappten und inaktiven Stellung zwischen den Seitenstreben 96 und 98 sowie den hinteren Querstreben 106 und 108 des Abdeckungsrahmens 90 mit seinen seitlichen Streben 66 und 68 und seinen der Schwenkachse 24 abgewandt angeordneten Querstreben 52 und 54.

Damit liegt der Windschottrahmen 50 im Wesentlichen innerhalb einer vom Abdeckungsrahmen 90 mit den Seitenstreben 96 und 98 sowie den hinteren Querstreben 106 und 108 begrenzten und bis zur Schwenkachse 24 reichenden Rahmenöffnung 124.

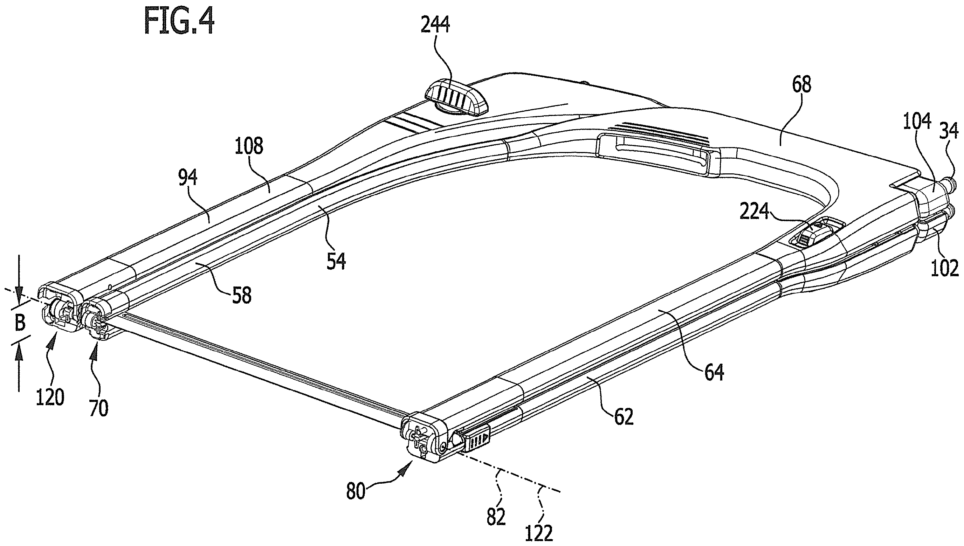

Vorzugsweise sind die Gelenke 70 und 80 sowie das Gelenk 120 ausgebildet und so angeordnet, dass in der in Fig. 3 dargestellten abgeklappten Stellung des Windschottrahmens 50 die Windschottfaltachse 82 sowie die Abdeckungsfaltachse 122 im Wesentlichen miteinander zusammenfallen, so dass eine gleichsinnige Faltung, d.h. eine Faltung sowohl des Windschotts 50 als auch der Abdeckung 90 um die Windschottfaltachse 82 sowie die Abdeckungsfaltachse 122, in einer Faltungsrichtung 128 zum Erreichen der in Fig. 4 dargestellten gefalteten Stellung möglich ist, bei welcher der Lagerkörper 102 unter dem Lagerkörper 104 liegt, die untere Querstrebe 62 unter der oberen Querstrebe 64 liegt, die obere Querstrebe 56 unter der oberen Querstrebe 58 liegt und die hintere Querstrebe 106 unter der hinteren Querstrebe 108 liegt.

Das heißt, dass bei Faltung um die miteinander zusammenfallenden Windschottfaltachse 82 und die Abdeckungsfaltachse 122 die Rahmenhälfte 52 des Windschottrahmens 50 auf der Seite der Rahmenhälfte 54 und der Rahmenbügel 92 des Abdeckungsrahmens 90 auf der Seite des Rahmenbügels 94 des Abdeckungsrahmens 90 liegen.

Bei symmetrischer Ausbildung der Rahmenhälften 52 und 54 bezüglich der Windschottfaltachse 82 und der Rahmenbügel 92 und 94 zur Abdeckungsfaltachse 122 liegen die Seitenstrebe 98 und die Seitenstrebe 96 sowie die seitliche Strebe 68 und die seitliche Strebe 66 jeweils übereinander.

In diesem Fall ist eine optimal kompakte Faltung der Windstopeinrichtung gegeben, bei welcher in der gefalteten Stellung die Bauhöhe das doppelte der Bauhöhe B der Windstopeinrichtung 10 bei abgeklappter Stellung des Windschottrahmens 50 beträgt.

Voraussetzung dafür, dass eine derart optimal kompakte Faltung möglich ist, ist, dass die Windschottfaltachse 82, wie beispielsweise in Fig. 3 dargestellt, in einer Ebene 86 liegt, die die Enden 72 und 74 der oberen Querstreben 56 und 58 sowie die Enden 76 und 78 der unteren Querstreben 62 und 64 auf einer Seite tangiert, oder berührt, jedoch nicht schneidet, so dass die Enden 72 und 74 sowie 76 und 78 nach dem Falten um die Windschottfaltachse 82 sich ungefähr parallel zueinander erstrecken und in geringem Abstand voneinander verlaufen oder aneinander anliegen.

In gleicher Weise ist auch die Abdeckungsfaltachse 122 so angeordnet, dass diese in einer Ebene 126 liegt, die ebenfalls die Enden 112 und 114 der hinteren Querstreben 106 und 108 nicht schneidet, sondern nur seitlich berührt, so dass auch nach dem Falten der hinteren Querstreben 106 und 108 um die Abdeckungsfaltachse 122 diese ungefähr parallel zueinander ausgerichtet werden können, wobei die Enden 112 und 114 sich berühren oder in geringem Abstand voneinander verlaufen.

Bei dem in den Fig. 1 bis 4 dargestellten ersten Ausführungsbeispiel der erfindungsgemäßen Windstopeinrichtung ist die Rahmenöffnung 84 des Windschottrahmens 50 durch ein strömungshinderndes Element 130 verschlossen, welches ungefähr in der Ebene 86 liegt und somit berührend an dem Windschottrahmen 50 auf einer in bezogen auf eine Vorwärtsfahrtrichtung 142 hinteren Seite des Windschottrahmens 50 und somit auf einer der Abdeckung 90 zugewandten Seite anliegt.

Ferner ist auch der Abdeckungsrahmen 90 durch ein strömungshinderndes Element 140 verschlossen, das an dem Abdeckungsrahmen 90 auf einer der Fahrzeugkarosserie 12 zugewandten Seite anliegt und sich somit im Bereich der Abdeckungsklappachse 122 in der Ebene 126 erstreckt.

Damit liegen in der in Fig. 3 dargestellten abgeklappten inaktiven Stellung des Windschottrahmens 50 die strömungshindernden Elemente 130 und 140 im Wesentlichen unmittelbar aufeinander auf.

Dadurch, dass sich diese strömungshindernden Elemente 130 bzw. 140 in den Ebenen 86 bzw. 126 erstrecken, liegen auch die Windschottfaltachse 82 und die Abdeckungsfaltachse 122 in der Fläche, in der sich das jeweilige strömungshindernde Element 130 bzw. 140 erstreckt, so dass ein Falten sowohl des Windschottrahmens 50 als auch des Abdeckungsrahmens 90 in einer die strömungshindernden Elemente 140 der Rahmenbügel 92, 94 aufeinanderlegenden Faltungsrichtung 128 ohne zusätzliche Zugeinwirkung auf das strömungshindernde Element 130 bzw. 140 möglich ist.

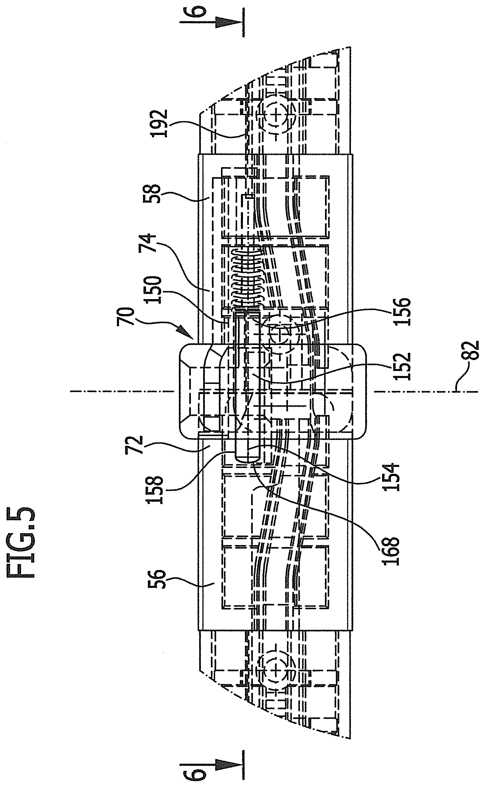

Bei einem, in Fig. 5 bis 11 dargestellten Ausführungsbeispiel einer erfindungsgemäßen Windstopeinrichtung ist das Gelenk 70, so ausgebildet, dass es insbesondere lediglich ein Schwenken um die jeweilige Windschottfaltachse 82, zum Falten des Windschottrahmens 50 und des Abdeckungsrahmens 90 in der einen Faltungsrichtung 128 zwischen der entfalteten Stellung und der zusammengefalteten Stellung zulässt, während das Gelenk 70 in der entfalteten Stellung des Windschotts 20 bei einer Faltbewegung in einer entgegengesetzten Faltungsrichtung blockiert.

Bei dem in der Faltungsrichtung 128 bewegbaren Gelenk 70 liegt in der aktiven Stellung des Windschotts 20 und des Windschottrahmens 50 die Windschottfaltachse 82 bezogen auf die Vorwärtsfahrtrichtung 142 auf der hinteren Seite des Windschottrahmens 50, wobei insbesondere die Enden 72 und 74 in der entfalteten Stellung aneinander anliegen und ausgehend von der entfalteten Stellung eine Faltung in einer der Faltungsrichtung 128 entgegengesetzten Faltungsrichtung blockieren.

Insbesondere kann das in der Faltungsrichtung 128 bewegbare Gelenk 70 in der aktiven Stellung des Windschottrahmens 50, dargestellt in Fig. 2, einer aufgrund des Winddrucks in Vorwärtsfahrtrichtung 142 wirkenden Winddruckkraft 144 nachgebend in Vorwärtsfahrtrichtung 142 ausweichen kann und dabei eine begrenzte Faltbewegung um die Windschottfaltachse 82 in der Vorwärtsfahrtrichtung 142 ausführen kann, bei welcher sich die Windschottfaltachse 82 in der Vorwärtsfahrtrichtung bewegt.

Um eine derartige unerwünschte Faltbewegung in der aktiven Stellung des Windschotts 20 zu verhindern umfasst das Windschott 20, insbesondere der Windschottrahmen 50, eine insbesondere dem Gelenk 70 zugeordnete und als Ganzes mit 150 bezeichnete Blockiereinrichtung, welche dazu dient, in der aktiven Stellung des Windschotts 20 eine Schwenkbewegung des Windschotts 20 um die Windschottfaltachse 82, insbesondere in Richtung eines Faltens von der entfalteten Stellung in die zusammengefaltete Stellung, zu verhindern.

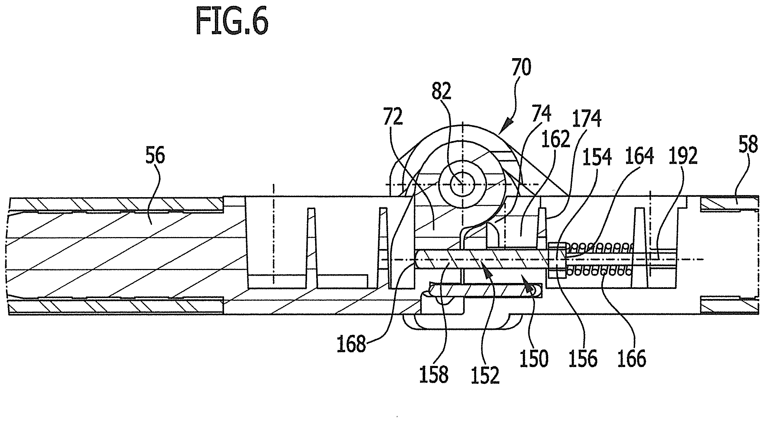

Die Blockiereinrichtung 150 umfasst dabei, wie in Fig. 5 und 6 dargestellt, ein im Ende 74 der Querstrebe 58 angeordnetes erstes Blockierelement 152, welches in dem Ende 74 der Querstrebe 58 in einer Führungsrichtung 154 parallel zu einer Mittelachse des Endes 74 verschiebbar gelagert ist und einen Führungskörper 156 aufweist, an welchem als Formschlusselement ein Vorsprung 158 angeformt ist, der beispielsweise die Form einer Zunge oder, wie im dargestellten Ausführungsbeispiel die Form eines zylindrischen Fortsatzes, aufweist.

Der Führungskörper 156 ist vorzugsweise als zylindrischer Stift ausgebildet und in einer einen Führungskanal umfassenden Blockierelementaufnahme 162 des Endes 76 in der Führungsrichtung 154 verschiebbar geführt.

Der Führungskörper 156 ist seinerseits mit einem Mitnehmer 164 fest verbunden, der insbesondere an einem dem Vorsprung 158 gegenüberliegenden Ende des Führungskörpers 156 gehalten ist.

Wie insbesondere in Fig. 5 dargestellt, wirkt auf den Mitnehmer 164 ein Federkraftspeicher 166, welcher den Mitnehmer 164 mitsamt dem ersten Blockierelement 152 in Richtung des gegenüberliegenden Endes 72 der Querstrebe 56 beaufschlagt, so dass das erste Blockierelement 152 in seiner, in Fig. 5 und 6 dargestellten Blockierstellung mit dem als Vorsprung ausgebildeten ersten Formschlusselement 158 eine Trennebene 172 zwischen den Enden 74 und 72 bei entfaltetem und somit gestrecktem Gelenk 70 durchgreift und in das Ende 72 der Querstrebe 56 hineinragt, so dass eine Stirnseite 168 des Vorsprungs 158 in dem Ende 72 der Querstrebe 56 angeordnet ist.

Die Blockierstellung des ersten Blockierelements 152 wird dabei vorgegeben durch einen Anschlag 174, an welchem der Mitnehmer 164 in der Blockierstellung anliegt und durch einen Federkraftspeicher 166 in der Blockierstellung in Anlage gehalten wird.

Ferner lässt sich beispielsweise die Freigabestellung des ersten Blockierelements 152 ebenfalls durch einen Anschlag 178, welcher der Einfachheit halber ebenfalls auf den Mitnehmer 164 wirkt, festlegen.

Die Blockiereinrichtung 150 umfasst ferner ein als Ganzes mit 182 bezeichnetes zweites Blockierelement, welches insbesondere stationär in dem Ende 72 der Querstrebe 52 angeordnet ist und einen Körper 186 aufweist, welcher als Formschlusselement nicht mit einem Vorsprung versehen ist sondern mit einer dem Ende 72 zugewandten Ausnehmung 188, die in einer quer zur Mittelachse 184 verlaufenden Ebene entweder einen rechteckigen oder im Falle eines stiftförmigen Vorsprungs 158 einen runden Querschnitt aufweisen kann.

Der Führungskörpers 186 ist vorzugsweise in dem Ende 72 der Querstrebe 52 integriert ausgebildet.

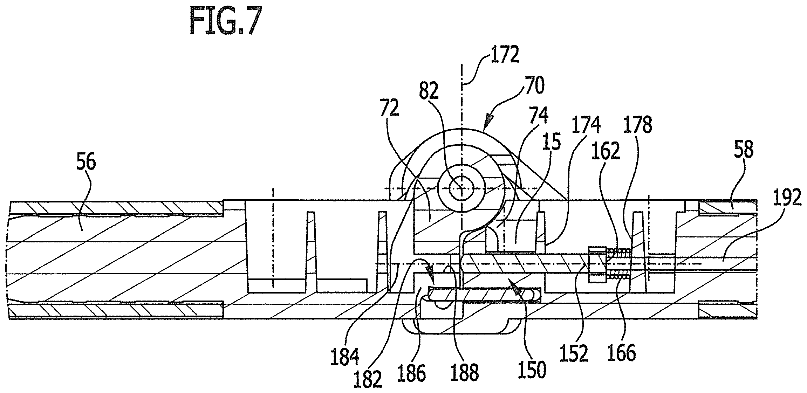

Zum Bewegen des ersten Blockierelements 152 aus der in Fig. 5 und 6 dargestellten Blockierstellung heraus, ist der Mitnehmer 164 mit einem als Zugelement 192 ausgebildeten Betätigungselement einer Betätigungseinrichtung 190 verbunden, welches, wie nachfolgend noch im Einzelnen beschrieben, wirksam ist, um beim Erreichen der inaktiven Stellung des Windschotts 20 das erste Blockierelement 152 in seine Freigabestellung zu bewegen, in welcher dieses, wie in Fig. 7 dargestellt, mit dem ersten Formschlusselement 158 nicht mehr die Trennebene 172 durchgreift, sondern maximal die Trennebene 172 berührt oder in einem geringen Abstand von dieser auf Seiten des Endes 74 der Querstrebe 54 angeordnet ist.

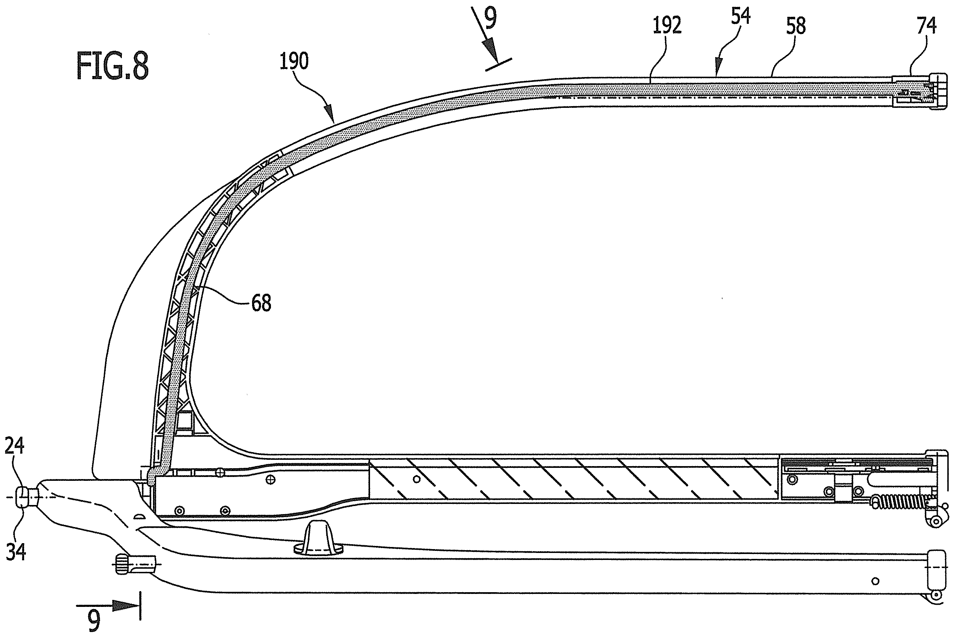

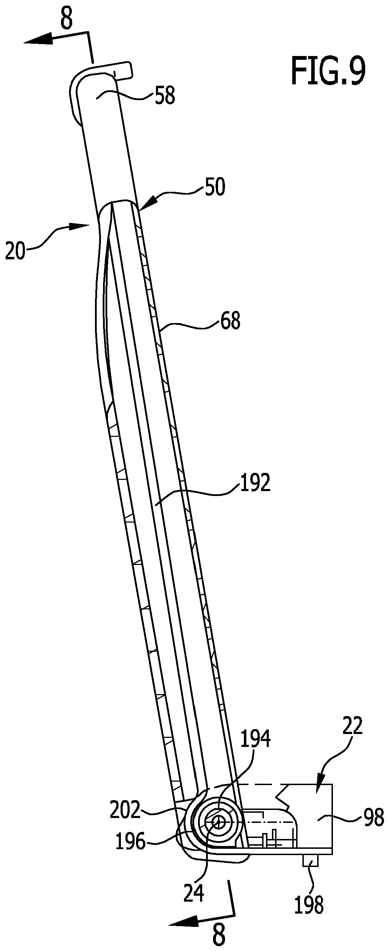

Wie in Fig. 8 dargestellt, verläuft das Zugelement 192 von dem freien Ende 74 innerhalb der Querstrebe 58 bis zur seitlichen Strebe 68 und innerhalb der seitlichen Strebe 68 in Richtung der Schwenkachse 24 bis zur Querstrebe 64, wobei das Zugelement 192, wie in Fig. 8 und 9 dargestellt, nahe der Schwenkachse 24 aus der seitlichen Strebe 68 herausgeführt ist und um einen Umlenkungskörper 194 der Betätigungseinrichtung 190 herumgeführt ist, und dabei über eine Umlenkungsfläche 196 verläuft, die zumindest bereichsweise der Abdeckung 22 abgewandt ist.

Von der Umlenkungsfläche 196 verläuft dann das Zugelement 192 weiter in Richtung der Seitenstrebe 98 der Abdeckung 90 und ist über ein Verbindungselement 198 mit der Seitenstrebe 98 fest verbunden.

Vorzugsweise ist das Umlenkungselement 194 ein zylindrischer Körper, welcher koaxial zur Schwenkachse 24 angeordnet ist, so dass die Umlenkungsfläche 196 ebenfalls eine zur Schwenkachse 24 zylindrische Fläche ist.

Der Umlenkungskörper 194 könnte aber auch eine beliebige andere Form aufweisen.

Wie in Fig. 9 dargestellt, liegt das Zugelement 192 auf der Umlenkungsfläche 196 mit einem Umlenkungsabschnitt 202 auf, wobei der Umlenkungsabschnitt 202 sich beispielsweise mit einem Umschlingungsweg auf der Umlenkungsfläche 196 erstreckt, der einem über ein Bogensegment von ungefähr 180° um die Schwenkachse 24 entspricht.

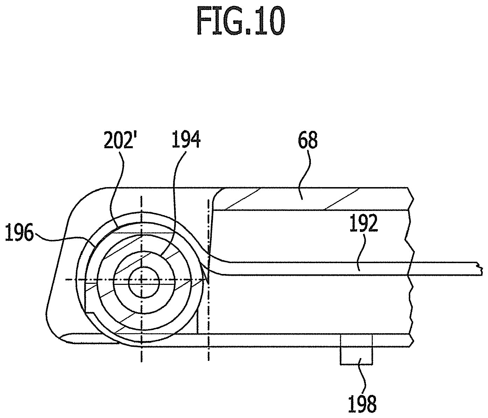

Wird jedoch der Windschottrahmen 50 des Windschotts 20 von der in Fig. 9 dargestellten aktiven Stellung um die Schwenkachse 24 in die in Fig. 10 dargestellte inaktive Stellung bewegt, so vergrößert sich der Umschlingungsweg des Umlenkungsabschnitts 202', mit welchem das Zugelement 192 auf der Umlenkungsfläche 196 des Umlenkungskörpers 194 aufliegt, bis zu einem Umschlingungsweg der einem Bogensegment von ungefähr 270° entspricht. Diese Vergrößerung des Umlenkungssegments 202 in der aktiven Stellung zum Umlenkungssegment 202' in der inaktiven Stellung führt dazu, dass das Zugelement 192 eine Zugkraft auf das erste Blockierelement 152 ausübt und dieses beim Verschwenken des Windschottrahmens 50 von der aktiven Stellung, dargestellt in Fig. 9, in die inaktive Stellung, dargestellt in Fig. 10, von der Blockierstellung in die Freigabestellung bewegt, so dass dann, wenn der Windschottrahmen 50 auf dem Abdeckungsrahmen 90 aufliegt, die Blockiereinrichtung 150 ein Schwenken des Gelenks 70 um die Windschottfaltachse 82 zulässt, und folglich in dieser inaktiven Stellung des Windschottrahmens 50 relativ zum Abdeckungsrahmen 90 das bereits beschriebene Falten um die Windschottfaltachse 82 und die Abdeckungsfaltachse 122 möglich ist.

Wird dagegen der Windschottrahmen 50 von der in Fig. 10 dargestellten inaktiven Stellung wieder in die aktive Stellung bewegt, so verkleinert sich der Umlenkungsabschnitt 202' in der inaktiven Stellung zum Umlenkungsabschnitt 202 in der aktiven Stellung und in dieser Stellung erlaubt das Zugelement 192, dass sich das erste Blockierelement 152 von der Freigabestellung in die Blockierstellung bewegt, und zwar durch Einwirkung des Federkraftspeichers 166, welcher das erste Blockierelement 152 ständig in Richtung der Blockierstellung beaufschlagt.

Durch die Blockiereinrichtung 150 kombiniert mit der Betätigungseinrichtung 190 ist somit sichergestellt, dass das der Schwenkachse 24 abgewandt angeordnete Gelenk 70 des Windschottrahmens 50 in der aktiven Stellung, dargestellt in Fig. 1 und 2, stets blockiert ist und somit ein Schwenken um die Windschottfaltachse 82 in der aktiven Stellung nicht erfolgen kann, während in der inaktiven Stellung das Gelenk 70 durch die Blockiereinrichtung 150 nicht blockiert ist und somit ein Falten der Windstopeinrichtung 10 von der entfalteten Stellung in die gefaltete Stellung um die Windschottfaltachse 82 sowie die Abdeckungsfaltachse 122, die insbesondere koaxial zueinander angeordnet sind, erfolgen kann.

## Patentansprüche

1. Windstopeinrichtung für Kraftfahrzeuge, insbesondere für Cabriofahrzeuge, umfassend ein Windschott (20) mit einem sich in einer Fahrzeugquerrichtung (28) erstreckenden Windschottrahmen (50) und mit einem eine Rahmenöffnung (84) des Windschottrahmens (50) verschließenden strömungshindernden Element (130), wobei das Windschott (20) durch mindestens ein Gelenk (70, 80) um eine Windschottfaltachse (82) zwischen einer entfalteten Stellung und einer zusammengefalteten Stellung faltbar ist, eine mit dem Windschott um eine sich in Fahrzeugquerrichtung (28) erstreckende Schwenkachse (24) schwenkbar verbundene Abdeckung (22) mit einem sich von der Schwenkachse (24) weg erstreckenden Abdeckungsrahmen (90) und mit einem eine Rahmenöffnung (124) des Abdeckungsrahmens verschließenden strömungshindernden Element (140), wobei der Abdeckungsrahmen (90) durch mindestens ein Gelenk (120) um eine Abdeckungsfaltachse (122) zwischen einer entfalteten Stellung und einer zusammengefalteten Stellung faltbar ist, wobei zur Verhinderung einer Faltbewegung des Windschotts (20) um die Windschottfaltachse (82) der Windschottrahmen (50) mindestens auf einer der Schwenkachse (24) abgewandten Seite mit einer Blockiereinrichtung (150) versehen ist, welche in einer Blockierstellung eine Faltbewegung des Windschottrahmens (50) um die Windschottfaltachse (82) blockiert und welche in einer Freigabestellung das Falten des Windschottrahmens (50) um die Windschottfaltachse (82) von der entfalteten Stellung in die gefaltete Stellung und umgekehrt zulässt, **dadurch gekennzeichnet, dass** der Blockiereinrichtung (150) eine Betätigungseinrichtung (190) zugeordnet ist, welche bei einem Schwenken des Windschotts (20) von der aktiven Stellung in die inaktive Stellung die Blockiereinrichtung (150) in die Freigabestellung überführt, und dass die Betätigungseinrichtung (190) die Stellung des Windschotts (20) relativ zur Abdeckung (22) erfasst und beim Übergang von der aktiven Stellung in die inaktive Stellung die Blockiereinrichtung (150) in die Freigabestellung überführt.

2. Windstopeinrichtung nach Anspruch 1, **dadurch gekennzeichnet, dass** die Blockiereinrichtung (150) in der Blockierstellung zwischen der Schwenkachse (24) abgewandt angeordneten Querstreben (52, 54) des Windschottrahmens (50) wirksam ist, um die Faltbewegung um die Windschottfaltachse (82) zu blockieren.

3. Windstopeinrichtung nach Anspruch 1 oder 2, **dadurch gekennzeichnet, dass** die Blockiereinrichtung (150) ein zwischen einer Blockierstellung und einer Freigabestellung bewegbares erstes Blockierelement (152) aufweist, welches in der Blockierstellung mit einem zweiten Blockierelement (182) zusammenwirkt und dass insbesondere das erste Blockierelement (152) und das zweite Blockierelement (182) in der Blockierstellung formschlüssig zusammenwirken.

4. Windstopeinrichtung nach einem der voranstehenden Ansprüche, **dadurch gekennzeichnet, dass** die Blockierelemente (152, 182) an der Windschottfaltachse (82) zugewandten freien Enden (72, 74) von Querstreben (56, 58) des Windschottrahmens (50) angeordnet sind.

5. Windstopeinrichtung nach einem der voranstehenden Ansprüche, **dadurch gekennzeichnet, dass** die Blockiereinrichtung (150) einem auf einer der Schwenkachse (24) abgewandten Seite des Windschottrahmens (50) angeordneten Gelenk (70) zugeordnet ist.

6. Windstopeinrichtung nach einem der voranstehenden Ansprüchen, **dadurch gekennzeichnet, dass** die Betätigungseinrichtung (190) ein am Windschottrahmen (50) angeordnetes Betätigungselement (192) umfasst, welches zumindest in der inaktiven Stellung des Windschotts (20) mit der Abdeckung (22) derart zusammenwirkt, dass die Blockiereinrichtung (150) in der inaktiven Stellung des Windschotts (20) in der Freigabestellung steht.

7. Windstopeinrichtung nach Anspruch 6, **dadurch gekennzeichnet, dass** das Betätigungselement als Zugelement ausgebildet ist.

8. Windstopeinrichtung nach Anspruch 6 oder 7, **dadurch gekennzeichnet, dass** das Betätigungselement (192) an einem Ende mit der Abdeckung (22) gekoppelt ist.

9. Windstopeinrichtung nach einem der voranstehenden Ansprüche, **dadurch gekennzeichnet, dass** das Betätigungselement über einen im Bereich der Schwenkachse (24) angeordneten Umlenkungskörper (194) verläuft und dass insbesondere der Umlenkungskörper so angeordnet ist, dass ein Umschlingungsweg des Umlenkungsabschnitts (202) des Bestätigungselements (192) in der aktiven Stellung des Windschotts (20) kürzer ist als in der inaktiven Stellung des Windschotts (20).

10. Windstopeinrichtung nach einem der voranstehenden Ansprüche, **dadurch gekennzeichnet, dass** das Windschott (20) so ausgebildet ist, dass dieses in seiner aktiven Stellung ohne die Wirkung der Blockiereinrichtung (150) eine Faltbewegung um die Windschottfaltachse (82) ausführen kann, bei welcher sich die Windschottfaltachse (82) in Vorwärtsfahrtrichtung des Kraftfahrzeugs bewegt.

11. Windstopeinrichtung nach einem der voranstehenden Ansprüche, **dadurch gekennzeichnet, dass** der Windschottrahmen (50) und der Abdeckungsrahmen (90) um die Schwenkachse (24) derart gegeneinander verschwenkbar sind, dass zu einer abgeklappten Stellung des Windschottrahmens (50) der eine der Rahmen (50, 90) in der Rahmenöffnung (124, 84) des anderen der Rahmen (90, 50) liegt.

12. Windstopeinrichtung nach einem der voranstehenden Ansprüche, **dadurch gekennzeichnet, dass** ausgehend von der abgeklappten Stellung des Windschottrahmens (50) der Windschottrahmens (50) und der Abdeckungsrahmen (90) in derselben Faltrichtung (128) faltbar sind.

13. Windstopeinrichtung nach einem der voranstehenden Ansprüche, **dadurch gekennzeichnet, dass** die Windschottfaltachse (82) und die Abdeckungsfaltachse (122) in der abgeklappten Stellung des Windschottrahmens (50) im Wesentlichen miteinander zusammenfallend angeordnet sind.

## Claims

1. Wind stop device for motor vehicles, in particular for convertible vehicles, comprising a wind blocker (20) with a wind blocker frame (50) extending in a transverse direction (28) of the vehicle and a flow-inhibiting element (130) closing a frame opening (84) of the wind blocker frame (50), wherein the wind blocker (20) is foldable about a wind blocker folding axis (82) between an unfolded position and a folded together position by way of at least one joint (70, 80), a cover (22) connected to the wind blocker so as to be pivotable about a pivot axis (24) extending in a transverse direction (28) of the vehicle, said cover having a cover frame (90) extending away from the pivot axis (24) and a flow-inhibiting element (140) closing a frame opening (124) of the cover frame, wherein the cover frame (90) is foldable about a cover folding axis (122) between an unfolded position and a folded together position by way of at least one joint (120), wherein to prevent a folding movement of the wind blocker (20) about the wind blocker folding axis (82) the wind blocker frame (50) is provided with a blocking device (150) at least on a side facing away from the pivot axis (24), said blocking device blocking any folding movement of the wind blocker frame (50) about the wind blocker folding axis (82) in a blocking position and permitting the folding of the wind blocker frame (50) about the wind blocker folding axis (82) from the unfolded position into the folded position and vice versa in a release position, **characterized in that** an actuating device (190) is associated with the blocking device (150), said actuating device transferring the blocking device (150) into the release position during pivoting of the wind blocker (20) from the active position into the inactive position, and that the actuating device (190) detects the position of the wind blocker (20) relative to the cover (22) and during transfer from the active position into the inactive position transfers the blocking device (150) into the release position.

2. Wind stop device as defined in claim 1, **characterized in that** in the blocking position the blocking device (150) is active between crossbars (52, 54) of the wind blocker frame (50) arranged so as to face away from the pivot axis (24) in order to block the folding movement about the wind blocker folding axis (82).

3. Wind stop device as defined in claim 1 or 2, **characterized in that** the blocking device (150) has a first blocking element (152) movable between a blocking position and a release position, said first blocking element interacting with a second blocking element (182) in the blocking position, and that the first blocking element (152) and the second blocking element (182) interact in the blocking position, in particular, in a form-locking manner.

4. Wind stop device as defined in any one of the preceding claims, **characterized in that** the blocking elements (152, 182) are arranged on free ends (72, 74) of crossbars (56, 58) of the wind blocker frame (50), said free ends facing the wind blocker folding axis (82).

5. Wind stop device as defined in any one of the preceding claims, **characterized in that** the blocking device (150) is associated with a joint (70) arranged on a side of the wind blocker frame (50) facing way from the pivot axis (24).

6. Wind stop device as defined in any one of the preceding claims, **characterized in that** the actuating device (190) comprises an actuating element (192) arranged on the wind blocker frame (50), said actuating element interacting with the cover (22) at least in the inactive position of the wind blocker (20) in such a manner that the blocking device (150) is in the release position in the inactive position of the wind blocker (20).

7. Wind stop device as defined in claim 6, **characterized in that** the actuating element is designed as a traction element.

8. Wind stop device as defined in claim 6 or 7, **characterized in that** the actuating element (192) is coupled to the cover (22) at one end.

9. Wind stop device as defined in any one of the preceding claims, **characterized in that** the actuating element runs over a redirecting member (194) arranged in the region of the pivot axis (24) and that the redirecting member, in particular, is arranged such that a looping path of the redirected section (202) of the actuating element (192) is shorter in the active position of the wind blocker (20) than in the inactive position of the wind blocker (20).

10. Wind stop device as defined in any one of the preceding claims, **characterized in that** the wind blocker (20) is designed such that it is able to carry out a folding movement about the wind blocker folding axis (82) in its active position without the action of the blocking device (150) and during said movement the wind blocker folding axis (82) moves in the forward direction of travel of the motor vehicle.

11. Wind stop device as defined in any one of the preceding claims, **characterized in that** the wind blocker frame (50) and the cover frame (90) are pivotable about the pivot axis (24) relative to one another in such a manner that for a folded-down position of the wind blocker frame (50) one of the frames (50, 90) is located in the frame opening (124, 84) of the other one of the frames (90, 50).

12. Wind stop device as defined in any one of the preceding claims, **characterized in that** proceeding from the folded-down position of the wind blocker frame (50) the wind blocker frame (50) and the cover frame (90) are foldable in the same folding direction (128).

13. Wind stop device as defined in any one of the preceding claims, **characterized in that** the wind blocker folding axis (82) and the cover folding axis (122) are arranged essentially to coincide with one another in the folded-down position of the wind blocker frame (50).

## Revendications

1. Dispositif coupe-vent pour véhicules à moteur, en particulier pour cabriolets, comportant un déflecteur de vent (20) pourvu d'un cadre de déflecteur (50) s'étendant dans une direction transversale de véhicule (28) et un élément (130) d'obstruction d'écoulement de l'air fermant une ouverture de cadre (84) du cadre de déflecteur (50), dans lequel le déflecteur (20) est repliable par l'intermédiaire d'au moins une articulation (70, 80) autour d'un axe de déflecteur (82) entre une position dépliée et une position repliée, un couvercle (22) relié de manière pivotante au déflecteur de manière à pouvoir pivoter autour d'un axe de pivotement (24) s'étendant dans la direction transversale du véhicule (28) et pourvu d'un cadre de couvercle (90) s'étendant à distance de l'axe de pivotement (24) et d'un élément (140) d'obstruction d'écoulement fermant une ouverture de cadre (124) du cadre de couvercle, dans lequel le cadre de couvercle (90) peut être plié par l'intermédiaire d'au moins une articulation (120) autour d'un axe de pliage de couvercle (122) entre une position dépliée et une position repliée,
dans lequel, pour empêcher un mouvement de pliage du déflecteur (20) autour de l'axe de pliage de déflecteur (82), le cadre de déflecteur (50) est pourvu au moins sur une face opposée à l'axe de pivotement (24) d'un dispositif de blocage (150), lequel, dans une position de blocage, bloque un mouvement de pliage du cadre de déflecteur (50) autour de l'axe de déflecteur (82) et lequel, dans une position de libération, permet le pliage du cadre de déflecteur (50) autour de l'axe de pliage de déflecteur (82) de la position dépliée à la position pliée et inversement, **caractérisé en ce qu'**un dispositif d'actionnement (190) est associé au dispositif de blocage (150) et, lorsque le déflecteur (20) pivote de la position active dans la position inactive, fait passer le dispositif de blocage (150) dans la position de libération, et **en ce que** le dispositif d'actionnement (190) détecte la position du déflecteur (20) par rapport au couvercle (22) et, lors du passage de la position active à la position inactive, fait passer le dispositif de blocage (150) dans la position de libération.

2. Dispositif coupe-vent selon la revendication 1, **caractérisé en ce que** le dispositif de blocage (150) agit dans la position de blocage entre des traverses (52, 54) du cadre de déflecteur (50) agencées de manière à être opposées à l'axe de pivotement (24), afin de bloquer le mouvement de pliage autour de l'axe de pliage de déflecteur (82).

3. Dispositif coupe-vent selon la revendication 1 ou 2, **caractérisé en ce que** le dispositif de blocage (150) présente un premier élément de blocage (152) mobile entre une position de blocage et une position de libération, lequel élément coopère dans la position de blocage avec un deuxième élément de blocage (182) et **en ce que**, en particulier, le premier élément de blocage (152) et le deuxième élément de blocage (182) sont en coopération de formes dans la position de blocage.

4. Dispositif coupe-vent selon l'une quelconque des revendications précédentes, **caractérisé en ce que** les éléments de blocage (152, 182) sont agencés aux extrémités libres (72, 74), tournées vers l'axe de pliage de déflecteur (82), des traverses (56, 58) du cadre de déflecteur (50).

5. Dispositif coupe-vent selon l'une quelconque des revendications précédentes, **caractérisé en ce que** le dispositif de blocage (150) est associé à une articulation (70) agencée sur une face du cadre de déflecteur (50) opposée à l'axe de pivotement (24).

6. Dispositif coupe-vent selon l'une quelconque des revendications précédentes, **caractérisé en ce que** le dispositif d'actionnement (190) comporte un élément d'actionnement (192) qui est agencé sur le cadre de déflecteur (50) et qui coopère avec le couvercle (22) au moins dans la position inactive du déflecteur (20), de telle sorte que le dispositif de blocage (150), dans la position inactive du déflecteur (20), se trouve dans la position de libération.

7. Dispositif coupe-vent selon la revendication 6, **caractérisé en ce que** l'élément d'actionnement est réalisé sous la forme d'un élément de traction.

8. Dispositif coupe-vent selon la revendication 6 ou 7, **caractérisé en ce que** l'élément d'actionnement (192) est accouplé au couvercle (22) par une extrémité.

9. Dispositif coupe-vent selon l'une quelconque des revendications précédentes, **caractérisé en ce que** l'élément d'actionnement s'étend sur un corps de déviation (194) agencé dans la zone de l'axe de pivotement (24) et **en ce que**, en particulier, le corps de déviation est agencé de sorte qu'une voie d'enserrage de la partie de déviation (202) de l'élément d'actionnement (192) est plus courte dans la position active du déflecteur (20) que dans la position inactive du déflecteur (20).

10. Dispositif coupe-vent selon l'une quelconque des revendications précédentes, **caractérisé en ce que** le déflecteur (20) est conçu de manière à pouvoir exécuter dans sa position active, sans que n'agisse le dispositif de blocage (150), un mouvement de pliage autour de l'axe de pliage de déflecteur (82), selon lequel l'axe de pliage de déflecteur (82) se déplace dans le sens de marche avant du véhicule à moteur.

11. Dispositif coupe-vent selon l'une quelconque des revendications précédentes, **caractérisé en ce que** le cadre de déflecteur (50) et le cadre de couvercle (90) peuvent être amenés à pivoter l'un par rapport à l'autre autour de l'axe de pivotement (24), de telle sorte que l'un des cadres (50, 90) se situe dans l'ouverture de cadre (124, 84) de l'autre cadre (90, 50), pour obtenir une position rabattue du cadre de déflecteur (50).

12. Dispositif coupe-vent selon l'une quelconque des revendications précédentes, **caractérisé en ce que** le cadre de déflecteur (50) et le cadre de couvercle (90) peuvent être pliés dans le même sens de pliage (128) à partir de la position rabattue du cadre de déflecteur (50) .

13. Dispositif coupe-vent selon l'une quelconque des revendications précédentes, **caractérisé en ce que** l'axe de pliage de déflecteur (82) et l'axe de pliage de couvercle (122) sont agencés de manière à coïncider sensiblement l'un avec l'autre dans la position rabattue du cadre de déflecteur (50).
